Europäisches Patentamt

European Patent Office

Office européen des brevets

(11) Numéro de publication: **0 376 907**
**A1**

(12) # DEMANDE DE BREVET EUROPEEN

(21) Numéro de dépôt: **89870105.7**

(22) Date de dépôt: **28.06.89**

(51) Int. Cl.⁵: **A47J 36/20, A47J 27/04**

(30) Priorité: **30.12.88 EP 88870200**

(43) Date de publication de la demande:
**04.07.90 Bulletin 90/27**

(84) Etats contractants désignés:
**AT BE CH DE ES FR GB GR IT LI LU NL SE**

(71) Demandeur: **De Poorter, Robert**
**Zwitserlandstraat 14**
**B-8400 Oostende(BE)**

Demandeur: **Crabeels, Daniel**
**Vindictivelaan 19**
**B-8400 Oostende(BE)**

(72) Inventeur: **De Poorter, Robert**
**Zwitserlandstraat 14**
**B-8400 Oostende(BE)**
Inventeur: **Crabeels, Daniel**
**Vindictivelaan 19**
**B-8400 Oostende(BE)**

(74) Mandataire: **Pieraerts, Jacques et al**
**Bureau Gevers S.A. rue de Livourne 7 bte 1**
**B-1050 Bruxelles(BE)**

(54) **Procédé de cuisson à l'eau bouillante des chicons.**

(57) Procédé de cuisson à l'eau bouillante des chicons et une marmite pour la cuisson de ceux-ci selon ce procédé. La marmite (1) comprend des moyens (2, 3, 4) pour maintenir les chicons à la verticale, leur pied étant dirigé vers le bas.

EP 0 376 907 A1

## Procédé de cuisson à l'eau bouillante des chicons

La présente invention concerne un procédé de cuisson à l'eau bouillante des chicorées également connues sous le nom de "witloof" ou "endives de Bruxelles" ci-après dénommés chicons.

Dans le texte qui suit, l'expression "chicons" désigne de toute évidence le légume produit à partir d'une racine de chicorée.

Il est bien connu que le chicon comporte un pied qui est beaucoup plus consistant que le restant, formé, lui aussi, par des feuilles qui se sont développées dans l'obscurité mais qui forment une partie du légume moins consistante.

Le chicon a donc une structure bien spécifique et en raison de sa forme particulière, beaucoup de consommateurs attachent, non sans raisons, une grande importance à sa présentation.

Les demandeurs ont développé une méthode et mis au point une marmite qui permet de réaliser cet objectif de telle sorte que, quelle que soit la présentation désirée, le chicon garde une forme parfaite tout en étant, de plus, cuit de manière égale sur toute sa longueur.

Pour réaliser cet objectif selon l'invention, on dispose les chicons à la verticale, leur pied étant dirigé vers le fond dans un récipient contenant de l'eau jusqu'a un niveau qui correspond à la base des chicons, c.à.d. jusqu'à environ le tiers inférieur des chicons, on porte l'eau à ébullition pendant une période suffisante pour que la base ou partie immergée des chicons soit cuite à l'eau bouillante tandis que la partie supérieure du chicon qui émerge de l'eau bouillante soit étuvée à la vapeur.

Toujours selon l'invention on fait usage d'une marmite dans laquelle peut être disposé un récipient intérieur présentant un fond ajouré dont chaque orifice est calibré pour recevoir la base d'un chicon.

L'invention concerne également la marmite pour la mise en oeuvre du procédé selon l'invention, caractérisée en ce qu'elle comprend des moyens pour maintenir les chicons à la verticale leur pied étant dirigé vers le bas.

Les moyens en question sont, de préférence, constitués par un récipient intérieur présentant des orifices calibrés de manière à recevoir les pieds des chicons.

Dans une autre forme de réalisation, les moyens susdits sont constitués par un fond qui peut être immobilisé à une distance du fond de la marmite et présentant des orifices calibrés de manière à recevoir les pieds des chicons.

Un détail de l'invention réside dans le fait qu'en dehors des moyens pour maintenir les chicons à la verticale, elle comprend un ustensile additionnel permettant de repartir les chicons en deux, trois ou quatre portions.

D'autres détails et avantages de l'invention ressortiront de la description qui sera donnée ci-après d'un procédé de cuisson à l'eau bouillante de chicorées.

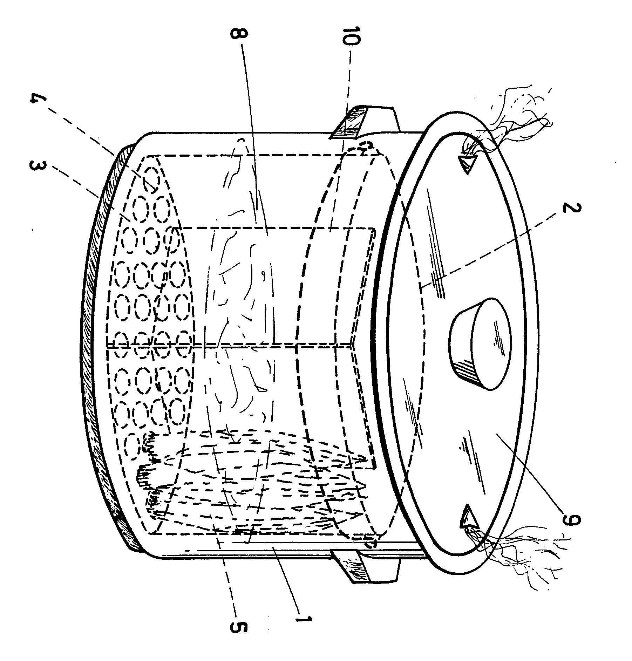

La figure ci-jointe est une vue en élévation de la marmite selon l'invention montrant également, en traits interrompus, le récipient intérieur.

Le procédé illustré par cette figure consiste à cuire les chicons à la verticale et l'expression "à la verticale" signifie, bien entendu, que les chicons sont disposés avec leur pied dirigé vers le bas de la marmite 1 dans laquelle ils sont cuits.

Dans cette marmite 1 on dispose, selon une forme d'exécution préférentielle, un récipient intérieur 2 dont le fond 3 présente des orifices 4 dont le diamètre a été choisi de telle sorte que les chicons 5 peuvent être disposés à la verticale. Les orifices 4 en question étant évidemment calibrés de manière que des chicons de taille moyenne et courante mais également des chicons sortant des normes moyennes peuvent être disposées dans lesdits orifices 4.

Lorsqu'on ne désire pas cuire plus de chi cons que la moitié, le tiers ou le quart de la capacité du récipient intérieur 2, on peut faire usage d'un ustensile 6 qui repose sur le fond 3 du récipient intérieur 2 et qui divise la capacité de celui-ci en deux, trois ou quatre parts.

Lorsqu'on ne fait pas usage d'un récipient intérieur 2, on peut disposer un fond amovible à quelque distance du fond de la marmite 3 et cela par tout moyen connu, soit que le fond présente des pieds par lesquels il repose sur le fond 3 de la marmite 1, soit qu'il présente des moyens de suspension par rapport à la paroi du récipient intérieur 2.

Il est important, et ceci est essentiel au procédé selon l'invention, que le niveau de l'eau de cuisson ne dépasse pas sensiblement le tiers inférieur des chicons. L'expression "tiers inférieur des chicons" évoque uniquement la partie du chicon qui peut être considérée comme le pied, partie qui est de structure plus dure et demande une cuisson à l'eau bouillante. Il est donc bien clair que cette expression "tiers inférieur" n'est pas absolument limitative et qu'en fonction de la nature et de la structure des chicons, ce niveau peut quelque peu varier. Les demandeurs expriment formellement leur volonté de prescrire un procédé dans lequel les pieds des chicons sont cuits à l'eau bouillante tandis que la partie du chicon qui peut être considérée comme de structure plus tendre, n'est pas cuite à l'eau bouillante mais est étuvée par la vapeur produite par l'eau de cuisson.

A la figure le niveau de l'eau qui doit être porté à ébullition est indiqué par la référence 8.

Il est donc évident que pour obtenir une cuisson à l'étuvé de la partie des chicons qui n'est pas plongée dans l'eau bouillante, la marmite selon l'invention est équipée d'un couvercle 9. Ce couvercle peut être étudié par laisser passer ou non la totalité de la vapeur produite.

En appliquant le procédé selon l'invention et en faisant usage de la marmite dérivée du procédé, on obtient des chicons qui ont conservé, de manière surprenante, leur structure interne et leur forme extérieure. Ils peuvent alors être servis tels quels ou être braisés ou encore être servis dans toute autre forme de présentation. La partie des chicons qui n'a pas été soumise à la cuisson à l'eau bouillante conserve étonnamment bien sa forme et comme le récipient intérieur 2 peut être extrait de la marmite 1 on peut laisser égoutter les chicons sans que ceux-ci doivent être le moins du monde manipulés.

Quoique les formes d'exécution de la marmite citées ici à titre d'exemple soient cylindriques, il est bien entendu que cette forme limitative ne limite en rien l'invention et que, si le besoin s'en faisait sentir, on pourrait passer à des formes de réalisation rectangulaires, par exemple. Bien des modifications pourraient donc être apportées aux formes d'exécution décrites sans sortir du cadre de la présente demande de brevet, l'invention visant essentiellement le procédé de cuisson nouveau et original qui permet de cuire de deux manières différentes mais appropriées les parties plus fermes que constituent les pieds des chicons et les parties de structure moins consistante formées par le restant des chicons. L'objectif est donc atteint en ce qui concerne une cuisson homogène du chicon dans son entier tout en conservant à celui-ci une forme parfaitement intacte ce qui est désirable dans de très nombreux cas.

**Revendications**

1. Procédé de cuisson à l'eau bouillante des chicorées également connues sous le nom de "witloof" ou "endives de Bruxelles" ci-après dénommés chicons, caractérisé en ce qu'on dispose les chicons à la verticale, leurs pieds étant dirigés vers le fond dans un récipient contenant de l'eau jusqu'à un niveau qui correspond à la base des chicons, c.à.d. jusqu'à environ le tiers inférieur des chicons, qu'on porte l'eau à ébullition pendant une période suffisante pour que la base ou partie immergée des chicons soit cuite à l'eau bouillante tandis que la partie supérieure du chicon qui émerge de l'eau bouillante soit étuvée à la vapeur.

2. Procédé selon la revendication 1, caractérisé en ce qu'on fait usage d'une marmite dans laquelle peut être disposé un récipient intérieur présentant un fond ajouré dont chaque orifice est calibré pour recevoir la base d'un chicon.

3. Marmite pour la cuisson de chicons selon le procédé conforme à l'une ou l'autre des revendications 1 et 2 selon lequel les chicons (5) sont cuits à la verticale l'eau de cuisson atteignant une hauteur (8) qui correspond sensiblement au tiers inférieur des chicons, caractérisée en ce qu'elle comprend des moyens pour maintenir les chicons (5) à la verticale, leur pied étant dirigé vers le bas.

4. Marmite selon la revendication 3, caractérisé en ce que les moyens susdits sont constitués par un récipient intérieur (2) présentant des orifices calibrés (4) de manière à recevoir les pieds des chicons (5).

5. Marmite selon la revendication 3, caractérisée en ce que les moyens susidts sont constitués par un fond qui peut être immobilisé à une distance du fond de la marmite et présentant des orifices calibrés de manière à recevoir les pieds de chicons.

6. Marmite selon l'une quelconque des revendications 3 - 5, caractérisée en ce qu'en dehors des moyens pour maintenir les chicons à la verticale, elle comprend un ustensile additionnel (10) permettant de répartir les chicons en deux, trois ou quatre portions.

# Office européen des brevets

# RAPPORT DE RECHERCHE EUROPEENNE

Numero de la demande

EP    89 87 0105

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-2807995 (PETTY)<br>* le document en entier * | 1, 3, 6 | A47J36/20<br>A47J27/04 |
| A | US-A-1716868 (STEPHENS)<br>* le document en entier * | 2, 4, 5 | |
| A | US-A-1726199 (SULLIVAN)<br>* le document en entier * | 2, 4, 5 | |
| A | CH-A-286818 (WAGNER)<br>* le document en entier * | 6 | |

### DOMAINES TECHNIQUES RECHERCHES (Int. Cl.5 )

A47J

Le présent rapport a été établi pour toutes les revendications

| Lieu de la recherche | Date d'achèvement de la recherche | Examinateur |
|---|---|---|
| LA HAYE | 12 MARS 1990 | MEINDERS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)